# EUROPEAN PATENT SPECIFICATION

(11) **EP 2 249 603 B1**
(45) Date of publication and mention of the grant of the patent: **10.07.2013**
(21) Application number: 09290336.8
(22) Date of filing: 07.05.2009
(51) Int. Cl.: H04W 36/08, H04W 76/06

(54) **Obtaining information of a neighbouring base station**
Beziehen von Informationen von einer benachbarten Basisstation
Obtention d'informations d'une station de base voisine

(43) Date of publication of application: 10.11.2010
(73) Proprietor: Alcatel Lucent, 75007 Paris (FR)
(72) Inventor: Sapiano, Philip, Corsham, Wiltshire, SN13 9AY (GB); Brend, Graham, Bath, BA1 7UE (GB); Bradley, Nigel, Cricklade, SN6 6LT (GB); Putman, Tony, Chippenham, SN15 5AQ (GB)
(74) Representative: Sarup, David Alexander

(56) References cited:
- EP-A- 1 432 262
- EP-A- 2 037 696
- WO-A-2007/110659
- US-A1- 2005 272 426
- US-A1- 2007 010 252

## Description

### Field of the Invention

The present invention relates to telecommunications, in particular to wireless telecommunications.

### Description of the Related Art

Wireless telecommunications systems are well-known. Many such systems are cellular in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as microcells, picocells, or femtocells, but we use the term femtocells generically for cells that are smaller than macrocells. One way to establish a femtocell is to provide a femtocell base station that operates within a relatively limited range within the coverage area of a macrocell. One example of use of a femtocell base station is to provide wireless communication coverage within a building.

The femtocell base station is of a relatively low transmit power and hence each femtocell is of a small coverage area compared to a macrocell.

Femtocell base stations are intended primarily for users belonging to a particular home or office. Femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of Femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. The femtocell base station also includes a radio frequency (RF) transceiver connected to an antenna for radio communications.

Femtocell base stations are sometimes referred to as femtos.

One problem of femtocell base stations, particularly those involving code division multiple access, such as those in accordance with current Third Generation Partnership Project (3GPP) Universal Mobile Telecommunications System (UMTS) standards, is that there are few primary scrambling codes (PSCs) available. Primary scrambling codes are broadcast by base stations over the radio interface and are used to distinguish between neighbouring base stations. Typically, there are between six and sixteen PSCs that are available to the femtocells. The PSC to be used by each femtocell base station is normally selected by an automatic configuration process based on measurements made by that femtocell base station. For example, a femto detects from received signals which PSCs are in use around that femto, and selects a PSC that the femto has not detected as being in use, else selects the PSC of the weakest signal received. In consequence, typically each of the available primary scrambling codes is used by multiple femtos, in other words much primary scrambling code "re-use".

As is known, user terminals in a cell make measurements as to signals received from other nearby base stations and report these measurements to the base station of that cell. This is so as to determine whether it is appropriate to handover the call connection with the user terminal from that cell to another cell from which a stronger or better quality signal is received.

With this level of PSC reuse, there is a strong chance that user terminals served by a femto will detect signals from multiple different cells having the same primary scrambling code. There is no unique cell identifier, often denoted Cell ID, reported in the user terminal's measurement report according to current 3GPP standards. Accordingly, there is ambiguity or uncertainty as to which of the neighbouring femtos using that PSC provides the best signal to the user terminal and so should be the handover target.

A known approach is to seek to handover to all of the femtocells that are identified as using the primary scrambling code of the best received signal. This is inefficient because only onc of the handover attempts is permitted to succeed. Network resources arc wasted that arc used in the handover attempts to the other femtocells than the one that is successful.

To determine which of the neighbouring femtos using that PSC provides the best signal to the user terminal and so should be the handover target, a known approach is for the femtocell base station to cease to transmit and instead receive at the frequency that user terminals receive at, in order to detect neighbouring femtos. This is known as sniffing. This works in detecting neighbouring femtos that are strongly transmitting, but may not detect every femto that the user terminal would detect as a handover candidate.

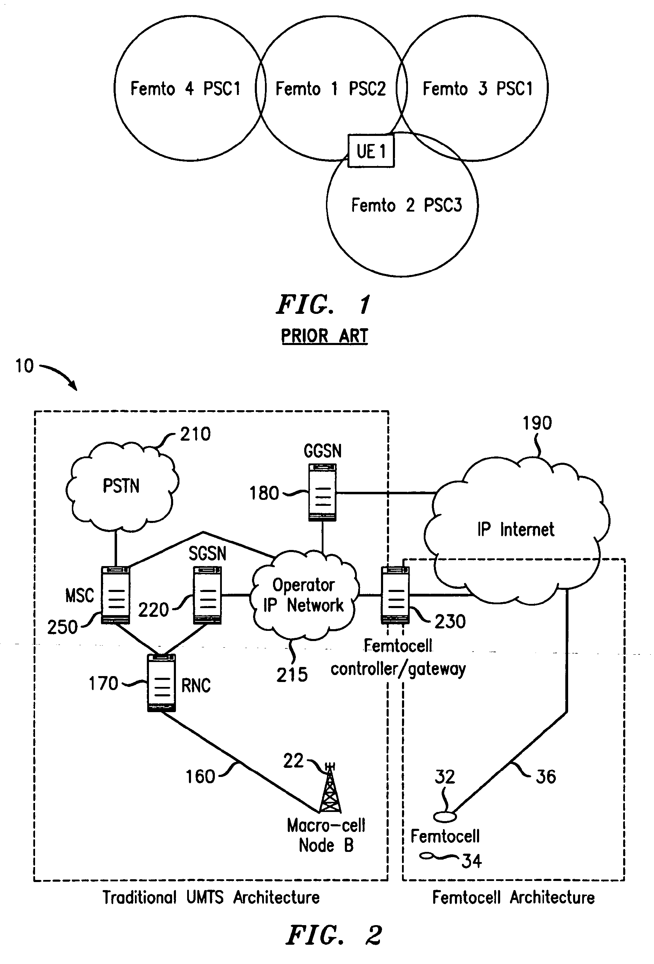

An example of the prior art approach involving sniffing is shown in Figure 1. As shown in Figure 1, the femtocell denoted Femto2, Femto3 and Femto4 are neighbours of Femto1. Femto4 and Femto3 both use the same primary scrambling code PSC1 whilst Femto1 uses a second primary scrambling code PSC2 and Femto2 uses a third primary scrambling code PSC3. In this example, Femto2 is so far away from Femto1 that Femto2 is not detected by sniffing by Femto1, however the user terminal detects Femto2 because Femto2 is much closer to the user terminal than to Femto1.

It is known from European Patent Publication EP-A-1432262 to provide a method of obtaining at a first wireless telecommunications base station information of a neighbouring wireless tclecommunications base station, the method comprising:
the first base station receiving a measurement report from a user terminal
the first base station determining from the measurement report that the user terminal has received a better signal from the neighbouring base station than from the first base station and instructing the user terminal to connect to the neighbouring base station,
the first base station receiving information of the neighbouring base station,
the first base station storing the information of the neighbouring base station.

### Summary

The present invention is characterised over the disclosure of EP-A-1432262 in that the first base station receives the information of the neighbouring base station from a base station-controlling gateway;
said information comprises a primary scrambling code, and in which in a learning phase the first base station compares the primary scrambling code from the base station-controlling gateway to that indicated in the measurement report from the user terminal, and the first base station stores the information of the neighbouring base station dependent upon the primary scrambling code comparison indicating a match;
in which said information also comprises timing offset of the base station clock, and in which in the learning phase the first base station compares the timing offset of the neighbouring base station indicated by the base station-controlling gateway to that indicated in the measurement report from the user terminal, and the first base station stores the information of the neighbouring base station dependent upon the timing offset comparison indicating a match;
in which the first base station enters said learning phase during which the connection to the first base station is maintained long enough for the connection to the neighbouring base station to become established and the base station-controlling gateway to send said information of the neighbouring base station to the first base station.

The reader is referred to the appended independent claims. Some preferred features arc laid out in the dependent claims.

An example of the present invention is a method of obtaining at a first wireless telecommunications base station information about a neighbouring wireless telecommunications base station. The method comprises the following steps. The first base station receives a measurement report from a user terminal. The first base station determines from the measurement report that the user terminal has received a better signal from the neighbouring base station than from itself and instructs the user terminal to connect to the neighbouring base station. The first base station receives information of the neighbouring base station. The first base station stores the information of the neighbouring base station.

Another example relates to a first wireless telecommunications base station comprising apparatus for obtaining information of a neighbouring wireless telecommunications base station. The apparatus comprises: a measurement report receiver configured to receive a measurement report from a user terminal, and a processor configured to determine from the measurement report that the user terminal has received a better signal from the neighbouring base station than from the first base station and to instruct the user terminal to connect to the neighbouring base station. The processor is configured to receive information of the neighbouring base station. The apparatus also comprises a memory comprising a neighbour list configured to store, under the control of the processor, the information of the neighbouring base station.

In some preferred embodiments, in this way relations to neighbouring femto base stations are readily determined. Hence the chance of dropping a call is reduced.

In some embodiments, neighbour information is obtained about neighbours that would not be disclosed by the known approach of sniffing.

Furthermore, preferably the first base station comprises a neighbour list and stores the information of the neighbouring base station in that neighbour list.

Furthermore, preferably the base stations are compliant with one or more of the 3GPP, UMTS, E-UMTS, and LTE standard.

Still furthermore, preferably said information comprises a unique cell identifier, and preferably the cell identifier is a Cell ID.

Preferably the base station-controller gateway is a femto-controlling gateway.

Preferably the information identifies the neighbouring base station. Preferably, the information comprises a unique cell identifier and may also comprise a primary scrambling code and a timing offset, in particular as applied to broadcast signals.

### Brief Description of the Drawings

Embodiments of the present invention will now be described by way of example and with reference to the drawings, in which:
Figure 1 is a diagram illustrating a known approach to identifying handover candidates for a user terminal (PRIOR ART),
Figure 2 is a diagram illustrating a wireless communications network according to an embodiment of the present invention, and
Figure 3 is a diagram illustrating an example femtocell base station deployment within one macrocell in the network shown in Figure 2,
Figure 4 is a diagram illustrating allocation of primary scrambling codes to femtocells within the network shown in Figure 2,
Figure 5 is a diagram illustrating in more detail the femtocell controller/gateway and two of the femtocell base stations, in the network shown in Figure 2.
Figure 6 is a message sequence diagram illustrating an example of identifying neighbour femtocell base stations in the network shown in Figure 2, and
Figure 7 is a message sequence diagram illustrating a second example of identifying neighbour femtocell base stations in the network shown in Figure 2.

### Detailed Description

We now describe a network including femtocell base stations then look in greater detail at a femtocell base station and the relevant operation of the femtocell base station.

### Network

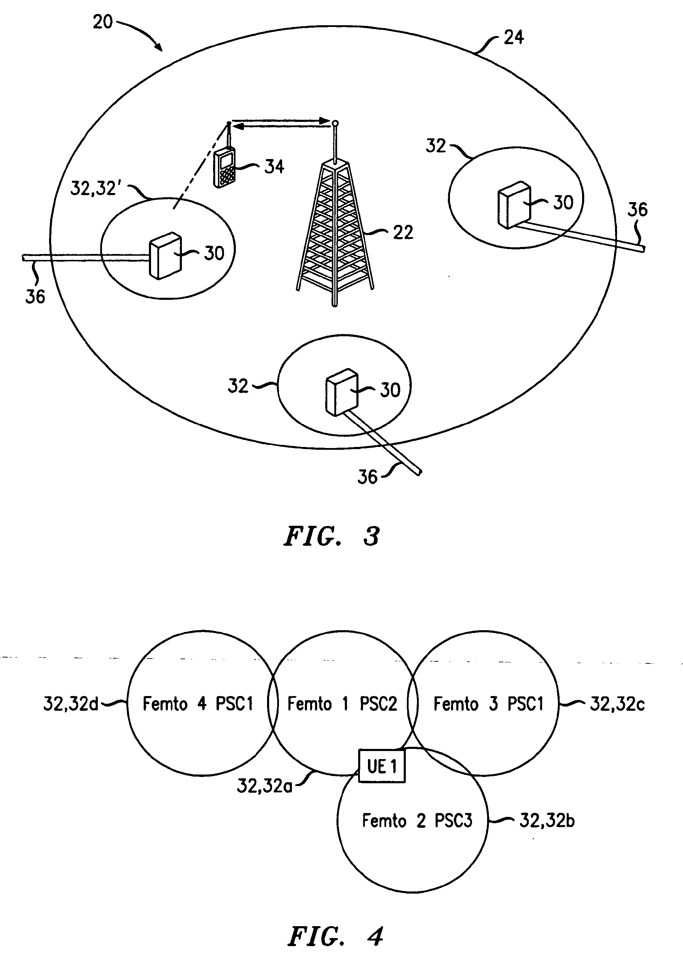

As shown in Figures 2 and 3, a network 10 for wireless communications, through which a user terminal 34 may roam, includes two types of base station, namely macrocell base stations and femtocell base stations (the latter being sometimes called "femtos"). One macrocell base station 22 is shown in Figures 2 and 3 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 2, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with service general packet radio service support nodes (SGSNs) 220 and a gateway general packet radio support node (GGSN) 180. The GGSN then communicates with a packet-switch core 190 such as, for example, the Internet.

The MSC 250 , SGSN 220, GGSN 180 and operator IP network 215 constitute a so-called core network. The MSC 250, SGSN 220 and GGSN 180 are connected by an operator IP network 215 to a femtocell controller/gateway 230.

The femtocell controller/gateway 230 is connected via the Internet 190 to the femtocell base stations 30. These connections to the femtocell controller/gateway 230 are broadband Internet Protocol connections ("backhaul") connections.

In Figure 3, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 3, the user of mobile terminal 34 is a preferred user of the nearest 32' of the femtocells 32.

As shown in Figure 3, the femtocell base stations 30 are connected via the broadband Internet Protocol connections ("backhaul") 36 to the core network (not shown in Figure 3) and hence the rest of the telecommunications "world" (not shown in Figure 3). The "backhaul" connections 36 allow communications between the femtocell base stations 30 through the core network (not shown). The macrocell base station is also connected to the core network (not shown in Figure 3).

As shown in Figure 4, the femtocells 32 provide contiguous coverage, for example within an office building, and have six available primary scrambling codes. In this example, these six codes, denoted PSC1,PSC2,.., PSC6 are distributed so as to avoid neighbouring cells having the same primary scrambling codes. Specifically, a first femtocell 32a uses code PSC2, and has six neighbouring femtos, three of which are shown for simplicity in Figure 4. Of these neighbouring femtos, one femtocell 32b uses a different code PSC3, and two femtocells 32c, 32d that also neighbour the first femtocell 32a use a further different code PSC1, being the same code as used by each other.

### Femtocell controller/gateway and femtocell base station

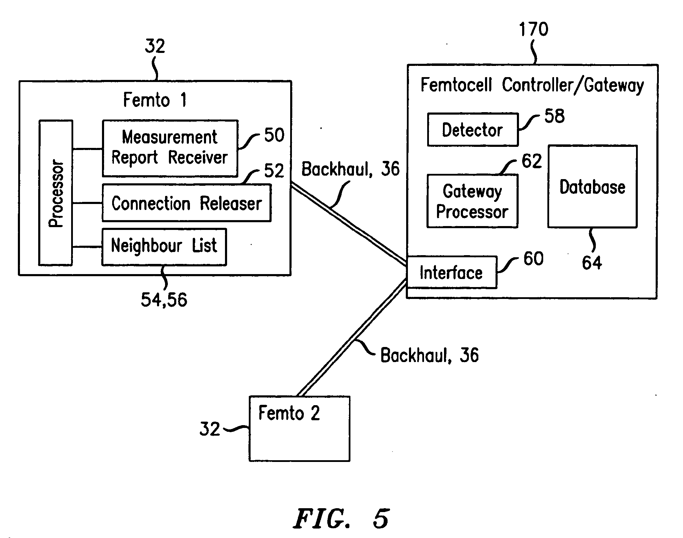

As shown in Figure 5, each femtocell base station 30 includes a measurement report receiver 50, a connection releaser 52, and a memory 54 in which is stored a neighbour list 56, in other words a record of neighbouring femtocell base stations. The memory is under the control of a processor 51 that is connected to the measurement report receiver and the connection releaser 52

As also shown in Figure 5, a femtocell base station 30 is connected via its backhaul connection 36 to the femtocell controller/gateway 170.

The femtocell controller/gateway 170 includes a detector 58, an interface 60, a gateway processor 62 and a database 64. The interface 60 is for connection to the femtocell base stations 30 via the backhaul connections 36. The detector is operative to detect that a connection to a user terminal exists both via a first femto (denoted Femto1 in Figure 5) and a second femto (denoted Femto2 in Figure 5).

The database 64 keeps records of the Cell ID of neighbouring femtocells and additional information regarding those neighbours, namely PSC and Timing offset.

The gateway processor 62 is operative to look up information in the database and attach information about Femto 2 (namely Cell ID, PSC and Timing Offset) to an Iu release command to be sent to Femto1. This is explained in more detail below.

### Identifying Neighbour Femtocell base stations

In the situation that a first ("old") femtocell base station ("femto") is connected to a user terminal that detects a new neighbour femto with sufficient quality, the first femto releases the connection with the user terminal so as to enable the user terminal to connect to the new femto. This new connection involves information about the new femto being passed to a femtocell controller/gateway from where information about that new femto is passed to the first femto which then updates its information about its neighbours.

More specifically, measurements of received signals by the user terminal provide the trigger for such a neighbour-relation learning operation as follows.

The user terminal sends periodic measurement reports as to strength and quality of received signals that the user terminal detects. In an alternative embodiment, the user terminal is instead configured to send a measurement report when the signal received from a neighbour is detected as being sufficiently high.

In the situation that the user terminal both detects that signals from the new femto are of much stronger strength and (/or) quality than the first femto, and the call is of a type given an acceptably low Quality of Service (QoS) such that the user terminal can be released from Cell_DCH state, then the first femto instructs the user terminal to release the connection, in other words to shift out of Cell_DCH state. Cell_DCH is a state in which there is a dedicated channel allocated between the user terminal and the femto. An example of such a call of acceptably low QoS is a packet-switched call that is inactive. Another example is a signalling bearer (channel) connection on which signalling has finished.

The user terminal then uses its cell selection/reselection mechanism in order to select for connection the femto that is indicated to the user terminal as providing the strongest/best quality signal to the user terminal. Connection to the new femto is then made, as part of which information about the new femto is passed to a femtocell controller/gateway. From the gateway, the information about the new femto is passed to the first femto which then updates its stored information about its neighbours.

This approach will be described in further detail by way of two examples.

### First Example

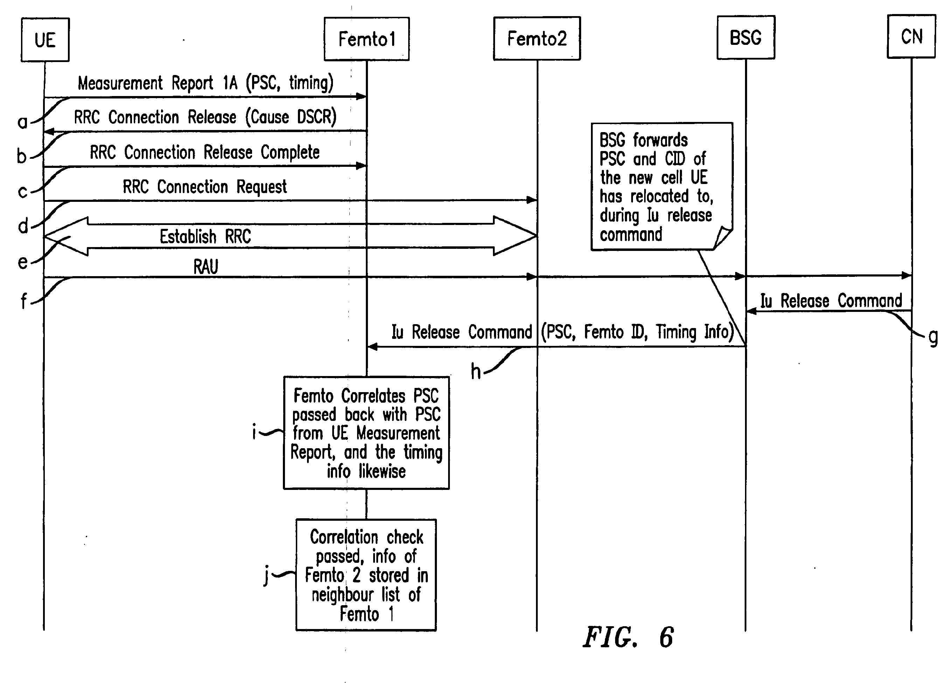

As shown in Figure 6, a measurement report is sent (step a) from the user terminal to the first Femto ("Femto 1"). The measurement report is of a known type 1A or 1C as defined in Third Generation Partnership Project (3GPP) Technical Specification TS25.331. The measurement report indicates that a new femto ("Femto 2") is detected that provides a better quality connection than the current femto ("Femto 1").

After checking and being satisfied that the call is of an acceptably low Quality of Service (QoS) type that the connection with the user terminal can be released, the first femto ("Femto 1") instructs (step b) the user terminal to release the connection. Specifically, Femto 1 sends a Radio Resource Control (RRC) Connection Release command to the user terminal with a cause DSCR which triggers the user terminal to perform a Routing Area Update (RAU) procedure. Cause DSCR denotes cause Directed Signalling Connection Re-establishment (DSCR), and is defined in 3GPP technical specifications TS 25.331, TS 24.008, and TS 23. 060. This cause value is an instruction for the user terminal to transition into idle mode, select a new femto for connection to, and perform a routing area update (RAU) procedure so as to inform the SGSN of the new routing area for the user terminal.

The user terminal replies (step c) with a RRC Connection Release Complete message.

The user terminal then sends (step d) an RRC Connection request to the new Femto ("Femto2") and the RRC connection is established (step e) between the user terminal and Femto2. The user terminal then performs (step f) a Routing Area Update (RAU) procedure via Femto 2 to the femtocell controller/gateway (denoted BSG, base station gateway, in Figure 6). From this RAU the femtocell controller gateway detects that the user terminal with resources established on Femto1 has now set up a connection on Femto2. As part of this procedure the Routing Area Update is forwarded by the femtocell controller/gateway to the core network (CN), specifically in this example, the SGSN.

The core network detects the RAU and that resources associated with that user terminal are currently allocated on Femto1. Accordingly, the core network sends (step g) a resource release command, namely an Iu release command, to the femtocell controller/gateway (BSG).

The femtocell controller/gateway (BSG) adds the Femto Identity (Cell ID), the primary scrambling code, and the timing information (all of Femto 2) to the Iu Release Command, and forwards (step h) this enhanced Iu Release Command to the first femto (Femto 1).

The first femto (Femto 1) then checks (step i) that the primary scrambling code and timing offset information indicated via the enhanced Iu Release Command are consistent with the primary scrambling code and timing offset information determined from the measurement report provided by the user terminal, and assuming this consistency check is passed, adds (step j) the primary scrambling code, the Femto Identity (Cell ID), and timing information (all of Femto2) into its stored neighbour list.

### Another Example

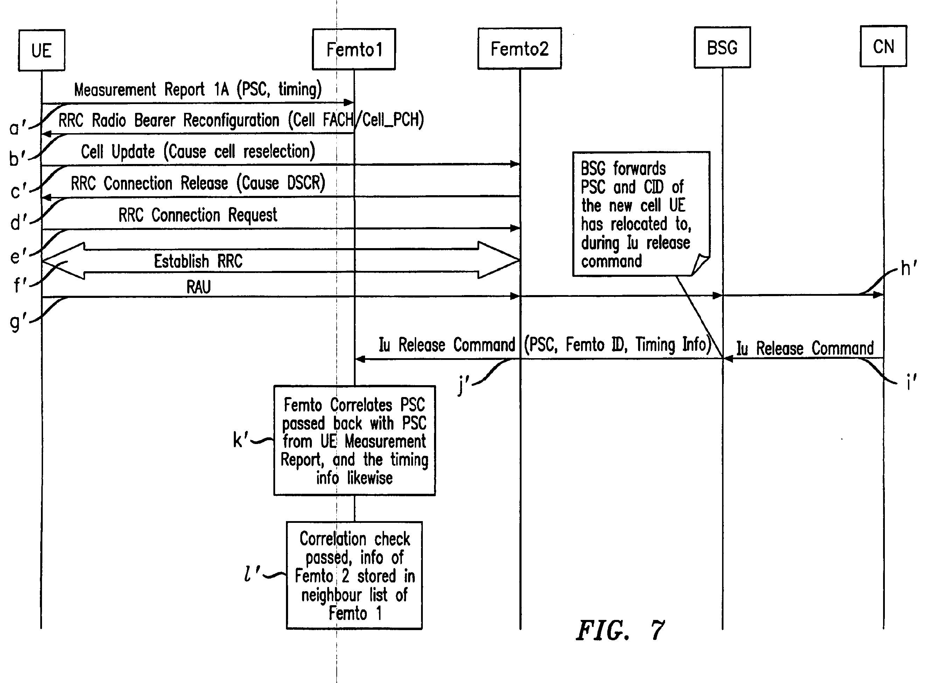

Another example is shown in Figure 7. In this example the user terminal is sent into a connected mode state, namely Cell_FACH (Cell_Forward Access Channel) or Cell_PCH (Cell_Paging Channel) state, and cell reselection results in the new femto being selected. The new femto sends the RRC connection release command to release the user terminal's connection with the first femto (Femto 1).

As shown in Figure 7, a measurement report is sent (step a') from the user terminal to the first Femto ("Femto 1"). The measurement report is of a type 1A or 1C as defined in Third Generation Partnership Project (3GPP) Technical Specification TS25.331. The measurement report indicates that a new femto ("Femto 2") is detected that provides a better quality connection than the current femto ("Femto 1").

After checking and being satisfied that the call is of an acceptably low Quality of Service (QoS) type that the connection with the user terminal can be released, the first femto ("Femto 1") instructs (step b') the user terminal to enter Cell_FACH or Cell_PCH state. Specifically, Femto 1 sends a Radio Resource Control (RRC) Radio Bearer Reconfiguration command to the user terminal.

The user terminal connects to Femto2 (step c') and sends a Cell Update message to Femto. The Cell Update message includes the user terminal's UTRAN radio network temporary identity (UE-U-RNTI) where UTRAN denotes UMTS terrestrial radio access network and UMTS denotes Universal Mobile Telecommunications System.

Femto2 inspects the Cell Update message and detects that the UE-U-RNTI indicates a femto other than itself so sends (step d') an RRC Connection Release command to the user terminal. This command includes a cause DSCR which triggers the user terminal to perform a Routing Area Update (RAU) procedure. Cause DSCR denotes cause Directed Signalling Connection Re-establishment (DSCR), and is a message defined in 3GPP technical specifications TS 25.331, TS 24.008, and TS 23. 060. This cause value is a trigger for the user terminal to send an RRC Connection Request to Femto2 (in this example) and perform a routing area update (RAU) procedure so as to inform the SGSN of the new routing area for the user terminal.

Accordingly, the user terminal sends (step e') an RRC Connection request to the new Femto ("Femto2") and the RRC connection is established (step f) between the user terminal and Femto2. The user terminal then performs (step g') a Routing Area Update (RAU) procedure via Femto 2 to the femtocell controller/gateway (denoted BSG, base station gateway, in Figure 7). As part of this procedure the Routing Area update is forwarded (step h') by the femtocell controller/gateway to the core network (CN), specifically the SGSN.

The core network detects the RAU and that resources associated with that user terminal are currently allocated to Femto1. Accordingly, the core network sends (step i') a resource release command, namely an Iu release command, to the femtocell controller/gateway (BSG).

The femtocell controller/gateway (BSG) adds the Femto Identity (Cell ID), the primary scrambling code and timing information (all of Femto 2) to the Iu Release Command, and forwards (step j') this enhanced Iu Release Command to the first femto (Femto 1).

The first femto (Femto 1) then checks (step k') that the primary scrambling code and timing offset information indicated via the enhanced Iu Release Command are consistent with the primary scrambling code and timing offset information determined from the measurement report provided by the user terminal, and assuming this consistency check is passed, adds (step 1') the primary scrambling code, the Femto Identity (Cell ID), and timing information (all of Femto2) into its stored neighbour list.

It will be noted that in both the examples shown in Figures 6 and 7, the RAU procedure causes the femtocell controller/gateway to be notified of the user terminal becoming connected to the new femto whilst there is still an existing connection with another ("old") femto. The gateway releases the resources related to the user terminal in the old femto and as part of this provides the old femto with information about the new femto that the user terminal has connected to.

The information of the new femto includes or consists of its Cell ID. In some embodiments, such as described with reference to Figures 6 and 7 above, the PSC and the Timing information are used to confirm the identity of the new femto. (In some other embodiments, these PSC and/or timing checks are not undertaken). Specifically in the Figure 6 and Figure 7 embodiments, a check is made whether the PSC in the initial measurement report matches the femto PSC provided from the femtocell controller/ gateway. Furthermore, a check is made whether the timing indicated in the initial measurement report is consistent with the timing information provided by the femtocell controller/gateway. The timing information is the synchronisation timing, in other words the timing offset of the 'new' femto. If yes, namely the PSC and timing information is consistent, the new femto is included in the neighbour list of the original femto. If no, the data is discarded.

In other words, the first ('old') femto acts to correlate the PSC information in the Iu release command with the PSC information in the user terminal measurement report. The first femto also correlates the timing offset information in the Iu release command with the information of timing in the user terminal measurement report and the time required for the Iu Release command to be transmitted. By way of these two correlations, a determination is made whether the information of the 'new' femto as a neighbour appears valid and if so it is recorded in the 'old' femto's neighbour list.

During this learning phase, the old femto maintains call connections for longer than otherwise before releasing them, in order to allow ample time for this learning about network topology (In some other embodiments, the old femto does not maintain call connections for longer). After some time, few new neighbour relationships are discovered, in other words each femto has a fairly up to date neighbour list. The learning phase is then terminated, and instead upon a better quality femto being detected that is in the neighbour list, simple handover as known to someone skilled in the art is undertaken.

In due course, a femto may decide a further such learning phase is required based upon a criterion or combination of criteria such as the percentage of failed handovers exceeding a certain limit, receiving measurement reports from user terminals that refer to a PSC that is not currently listed in the neighbour list, or receiving measurement reports from user terminals indicating timing information that does not match the timing of currently known neighbours.

In some otherwise similar embodiments, rather than the femtocell controller/gateway providing information of the neighbouring femtocell base station, the neighbouring femtocell base station itself provides information of itself to the first femtocell base station via the DSL backhaul. In a first example, the neighbour base station that the connection is transferred to sends the information about itself via the backhaul to other femtocell base stations that it is aware of. The first femtocell base station, having just released the connection to the user terminal, identifies that that neighbouring base station is "newly known" to the first femtocell base station and so records the information of that neighbouring femtocell base station.

In a second example, the first femtocell base station receives the measurement report "trigger" to transfer the connection, but before releasing the user terminal informs the other femtocell base stations via the DSL backhaul of the user terminal being released. Upon the user terminal connecting to the neighbouring femtocell base station, the neighbouring femtocell base station knows of the transfer from the first femotcell base station and so informs the first femtocell base station about itself.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of obtaining at a first wireless telecommunications base station information of a neighbouring wireless telecommunications base station, the method comprising:
the first base station receiving (Fig 6:a) a measurement report from a user terminal (UE)
the first base station determining from the measurement report that the user terminal has received a better signal from the neighbouring base station than from the first base station and instructing (Fig 6:b) the user terminal to connect to the neighbouring base station,
the first base station receiving information of the neighbouring base station,
the first base station storing the information of the neighbouring base station;
**characterised in that**
the first base station receives the information of the neighbouring base station from a base station-controlling gateway (170,BSG);
said information comprises a primary scrambling code, and in which in a learning phase the first base station compares (Fig 6:i) the primary scrambling code from the base station-controlling gateway to that indicated in the measurement report from the user terminal, and the first base station stores (Fig 6:j) the information of the neighbouring base station dependent upon the primary scrambling code comparison indicating a match;
in which said information also comprises timing offset of the base station clock, and in which in the learning phase the first base station compares (Fig 6:i) the timing offset of the neighbouring base station indicated by the base station-controlling gateway to that indicated in the measurement report from the user terminal, and the first base station stores (Fig 6:j) the information of the neighbouring base station dependent upon the timing offset comparison indicating a match;
in which the first base station enters said learning phase during which the connection to the first base station is maintained long enough for the connection to the neighbouring base station to become established and the base station-controlling gateway (BSG) to send (Fig 6:h) said information of the neighbouring base station to the first base station.

2. A method according to claim 1, in which the first base station receives the information of the neighbouring base station from the neighbouring base station.

3. A method according to claim 2, in which the first base station noti fies the base station-controlling gateway of information of the neighbouring base station and identity of the user terminal.

4. A method according to any preceding claim, further comprising:
the neighbouring base station connecting (Fig 6:d,e,f) to the user terminal,
the first base station releasing its connection to the user terminal upon receiving a release command comprising said information of the neighbouring base station.

5. A method according to any preceding claim, in which the better signal received by the user terminal is of at least one of a higher received signal strength or better quality than the signal received by the user terminal from the first base station.

6. A method according to any preceding claim, in which the base stations are femtocell base stations.

7. A method according to any preceding claim, in which said information comprises a unique cell identifier (Cell ID).

8. A first wireless telecommunications base station (32) comprising apparatus for obtaining information of a neighbouring wireless telecommunications base station, the apparatus comprising:
a measurement report receiver (50) configured to receive a measurement report from a user terminal (UE),
a processor configured to determine from the measurement report that the user terminal has received a better signal from the neighbouring base station than from the first base station and configured to instruct the user terminal to connect to the neighbouring base station,
the processor being configured to receive information of the neighbouring base station, and
a memory (54) comprising a neighbour list (56) configured to store, under the control of the processor, the information of the neighbouring base station.
**characterised in that**
the first base station is configured to receive the information of the neighbouring base station from a base station-controlling gateway (170,BSG);
said information comprises a primary scrambling code, and in which in a learning phase the first base station compares the primary scrambling code from the base station-controlling gateway to that indicated in the measurement report from the user terminal, and the first base station stores the information of the neighbouring base station dependent upon the primary scrambling code comparison indicating a match;
in which said information also comprises timing offset of the base station clock, and in which in the learning phase the first base station compares the timing offset of the neighbouring base station indicated by the base station-controlling gateway to that indicated in the measurement report from the user terminal, and the first base station stores the information of the neighbouring base station dependent upon the timing offset comparison indicating a match; and
in which the first base station is configured to enter said learning phase during which the connection to the first base station is maintained long enough for the connection to the neighbouring base station to become established and the base station-controlling gateway (BSG) to send said information of the neighbouring base station to the first base station.

## Patentansprüche

1. Verfahren zum Beziehen, an einer ersten drahtlosen Telekommunikationsbasisstation, von Informationen über eine benachbarte drahtlose Telekommunikationsbasisstation, wobei das Verfahren umfasst:
An der ersten Basisstation, Empfangen (Fig 6:a) eines Messberichts von einem Benutzerendgerät (UE)
an der ersten Basisstation, Ermitteln aus dem Messbericht, dass das Benutzerendgerät ein besseres Signal von der benachbarten Basisstation als von der ersten Basisstation empfangen hat, und Anweisen (Fig 6:b) des Benutzerendgeräts, sich mit der benachbarten Basisstation zu verbinden,
an der ersten Basisstation, Empfangen von Informationen über die benachbarte Basisstation,
an der ersten Basisstation, Speichern der Informationen über die benachbarte Basisstation;
**dadurch gekennzeichnet, dass**
die erste Basisstation die Informationen über die benachbarte Basisstation von einem Gateway, welches die Basisstation steuert (170,BSG), empfängt;
wobei die besagten Informationen einen primären Verwürfelungscode enthalten, und wobei die erste Basisstation in einer Lernphase den primären Verwürfelungscode von dem Gateway, welches die Basisstation steuert, mit dem in dem Messbericht von dem Benutzerendgerät angegebenen primären Verwürfelungscode vergleicht (Fig 6:i), und wobei die erste Basisstation die Informationen über die benachbarte Basisstation in Abhängigkeit von dem Vergleich der primären Verwürfelungscodes, welcher eine Übereinstimmung anzeigt, speichert (Fig 6:j);
wobei die besagten Informationen ebenfalls einen Zeitversatz des Taktgebers der Basisstation umfassen, und wobei die erste Basisstation in der Lernphase den von dem Gateway, welches die Basisstation steuert, angegebenen Zeitversatz der benachbarten Basisstation mit dem in dem Messbericht von dem Benutzerendgerät angegebenen Zeitversatz vergleicht (Fig 6:i), und wobei die erste Basisstation die Informationen über die benachbarte Basisstation in Abhängigkeit von dem Vergleich der Zeitversätze, welcher eine Übereinstimmung anzeigt, speichert (Fig 6:j);
wobei die erste Basisstation in die besagte Lernphase übergeht, während welcher die Verbindung mit der ersten Basisstation lange genug aufrecht erhalten wird, um den Aufbau der Verbindung mit der benachbarten Basisstation und das Senden (Fig 6:h) der besagten Informationen über die benachbarte Basisstation durch das Gateway, welches die Basisstation steuert (BSG), an die erste Basisstation zu ermöglichen.

2. Verfahren nach Anspruch 1, wobei die erste Basisstation die Informationen über die benachbarte Basisstation von der benachbarten Basisstation empfängt.

3. Verfahren nach Anspruch 2, wobei die erste Basisstation das Gateway, welches die Basisstation steuert, von den Informationen über die benachbarte Basisstation und die Identität des Benutzerendgeräts benachrichtigt.

4. Verfahren nach einem beliebigen der vorstehenden Ansprüche, weiterhin umfassend:
Verbinden (Fig 6:d,e,f) der benachbarten Basisstation mit dem Benutzerendgerät, Freigeben, durch die erste Basisstation, ihrer Verbindung mit dem Benutzerendgerät nach Empfangen eines Freigabebefehls, welcher die besagten Informationen über die benachbarte Basisstation enthält.

5. Verfahren nach einem beliebigen der vorstehenden Ansprüche, wobei das an dem Benutzerendgerät empfangene bessere Signal mindestens entweder eine höhere empfangene Signalstärke oder eine besserer Qualität als das an dem Benutzerendgerät von der ersten Basisstation empfangene Signal aufweist.

6. Verfahren nach einem beliebigen der vorstehenden Ansprüche, wobei die Basisstationen Femto-Basisstationen sind.

7. Verfahren nach einem beliebigen der vorstehenden Ansprüche, wobei die Informationen eine eindeutige Zellkennung (Cell ID) enthalten.

8. Erste drahtlose Telekommunikationsbasisstation (32) mit einer Vorrichtung zum Beziehen von Informationen über eine benachbarte drahtlose Telekommunikationsbasisstation, wobei die Vorrichtung umfasst:
Einen Messberichtempfänger (50), konfiguriert für den Empfang eines Messberichts von einem Benutzerendgerät (UE)
einen Prozessor, konfiguriert für das Ermitteln aus dem Messbericht, dass das Benutzerendgerät ein besseres Signal von der benachbarten Basisstation als von der ersten Basisstation empfangen hat, und konfiguriert für das Anweisen des Benutzerendgeräts, sich mit der benachbarten Basisstation zu verbinden,
wobei der Prozessor dafür konfiguriert ist, die Informationen über die benachbarte Basisstation zu empfangen, und
einen Speicher (54), welcher eine Nachbarliste (56) umfasst und für das Speichern, auf Ansteuerung des Prozessors, der Informationen über die benachbarte Basisstation konfiguriert ist,
**dadurch gekennzeichnet, dass**
die erste Basisstation dafür konfiguriert ist, die Informationen über die benachbarte Basisstation von einem Gateway, welches die Basisstation steuert (170,BSG), zu empfangen;
wobei die besagten Informationen einen primären Verwürfelungscode enthalten, und wobei die erste Basisstation in einer Lernphase den primären Verwürfelungscode von dem Gateway, welches die Basisstation steuert, mit dem in dem Messbericht von dem Benutzerendgerät angegebenen primären Verwürfelungscode vergleicht, und wobei die erste Basisstation die Informationen über die benachbarte Basisstation in Abhängigkeit von dem Vergleich der primären Verwürfelungscodes, welcher eine Übereinstimmung anzeigt, speichert;
wobei die besagten Informationen ebenfalls einen Zeitversatz des Taktgebers der Basisstation umfassen, und wobei die erste Basisstation in der Lernphase den von dem Gateway, welches die Basisstation steuert, angegebenen Zeitversatz der benachbarten Basisstation mit dem in dem Messbericht von dem Benutzerendgerät angegebenen Zeitversatz vergleicht, und wobei die erste Basisstation die Informationen über die benachbarte Basisstation in Abhängigkeit von dem Vergleich der Zeitversätze, welcher eine Übereinstimmung anzeigt, speichert; und
wobei die erste Basisstation für den Übergang in die besagte Lernphase, während welcher die Verbindung mit der ersten Basisstation lange genug aufrecht erhalten wird, um den Aufbau der Verbindung mit der benachbarten Basisstation und das Senden der besagten Informationen über die benachbarte Basisstation durch das Gateway, welches die Basisstation steuert (BSG), an die erste Basisstation zu ermöglichen, konfiguriert ist.

## Revendications

1. Procédé pour obtenir, au niveau d'une première station de base de télécommunications sans fil, des informations d'une station de base de télécommunications sans fil voisine, le procédé comprenant les étapes suivantes :
réception par la première station de base (Fig 6:a) d'un rapport de mesure de la part d'un terminal d'utilisateur (UE)
détermination par la première station de base, à partir du rapport de mesure, que le terminal d'utilisateur a reçu un meilleur signal de la part de la station de base voisine que de la part de la première station de base et commande (Fig 6:b) au terminal d'utilisateur de se connecter à la station de base voisine,
réception par la première station de base d'informations de la station de base voisine,
stockage par la première station de base des informations de la station de base voisine ;
**caractérisé en ce que**
la première station de base reçoit les informations de la station de base voisine de la part d'une passerelle de commande de station de base (170,BSG) ;
lesdites informations comprennent un code de brouillage primaire, et procédé selon lequel, dans une phase d'apprentissage, la première station de base compare (Fig 6:i) le code de brouillage primaire provenant de la passerelle de commande de station de base avec celui indiqué dans le rapport de mesure provenant du terminal d'utilisateur, et la première station de base stocke (Fig 6:j) les informations de la station de base voisine en fonction de l'indication ou non d'une concordance par la comparaison du code de brouillage primaire ;
procédé selon lequel lesdites informations comprennent également un décalage dans le temps de l'horloge de la station de base, et selon lequel, dans la phase d'apprentissage, la première station de base compare (Fig 6:i) le décalage dans le temps de la station de base voisine indiqué par la passerelle de commande de station de base avec celui indiqué dans le rapport de mesure provenant du terminal d'utilisateur, et la première station de base stocke (Fig 6:j) les informations de la station de base voisine en fonction de l'indication ou non d'une concordance par la comparaison du décalage dans le temps ;
procédé selon lequel la première station de base entre dans ladite phase d'apprentissage pendant laquelle la connexion avec la première station de base est maintenue pendant suffisamment longtemps pour que la connexion avec la station de base voisine soit établie et pour que la passerelle de commande de station de base (BSG) envoie (Fig 6:h) lesdites informations de la station de base voisine à la première station de base.

2. Procédé selon la revendication 1, selon lequel la première station de base reçoit les informations de la station de base voisine de la part de la station de base voisine.

3. Procédé selon la revendication 2, selon lequel la première station de base notifie la passerelle de commande de station de base des informations de la station de base voisine et de l'identité du terminal d'utilisateur.

4. Procédé selon l'une quelconque des revendications précédentes, comprenant en outre les étapes suivantes :
connexion (Fig 6:d,e,f) de la station de base voisine eu terminal d'utilisateur,
libération par la première station de base de sa connexion avec le terminal d'utilisateur sur réception d'une commande de libération contenant lesdites informations de la station de base voisine.

5. Procédé selon l'une quelconque des revendications précédentes, selon lequel le meilleur signal reçu par le terminal d'utilisateur est au moins une intensité de signal reçu supérieure ou une meilleure qualité que le signal reçu par le terminal d'utilisateur de la part de la première station de base.

6. Procédé selon l'une quelconque des revendications précédentes, selon lequel les stations de base sont des stations de base de femtocellule

7. Procédé selon l'une quelconque des revendications précédentes, selon lequel lesdites informations comprennent un identifiant de cellule unique (Cell ID).

8. Première station de base de télécommunications sans fil (32) comprenant un appareil pour obtenir des informations d'une station de base de télécommunications sans fil voisine, l'appareil comprenant :
un récepteur de rapport de mesure (50) configuré pour recevoir un rapport de mesure de la part d'un terminal d'utilisateur (UE),
un processeur configuré pour déterminer, à partir du rapport de mesure, que le terminal d'utilisateur a reçu un meilleur signal de la part de la station de base voisine que de la part de la première station de base et configuré pour commander au terminal d'utilisateur de se connecter à la station de base voisine,
le processeur étant configuré pour recevoir des informations de la station de base voisine, et
une mémoire (54) comprenant une liste de voisinage (56) configurée pour stocker, sous le contrôle du processeur, les informations de la station de base voisine,
**caractérisée en ce que**
la première station de base est configurée pour recevoir les informations de la station de base voisine de la part d'une passerelle de commande de station de base (170,BSG) ;
lesdites informations comprennent un code de brouillage primaire, et première station de base avec laquelle, dans une phase d'apprentissage, la première station de base compare le code de brouillage primaire provenant de la passerelle de commande de station de base avec celui indiqué dans le rapport de mesure provenant du terminal d'utilisateur, et la première station de base stocke les informations de la station de base voisine en fonction de l'indication ou non d'une concordance par la comparaison du code de brouillage primaire ;
première station de base avec laquelle lesdites informations comprennent également un décalage dans le temps de l'horloge de la station de base, et avec laquelle, dans la phase d'apprentissage, la première station de base compare le décalage dans le temps de la station de base voisine indiqué par la passerelle de commande de station de base avec celui indiqué dans le rapport de mesure provenant du terminal d'utilisateur, et la première station de base stocke les informations de la station de base voisine en fonction de l'indication ou non d'une concordance par la comparaison du décalage dans le temps ; et
première station de base avec laquelle la première station de base est configurée pour entrer dans ladite phase d'apprentissage pendant laquelle la connexion avec la première station de base est maintenue pendant suffisamment longtemps pour que la connexion avec la station de base voisine soit établie et pour que la passerelle de commande de station de base (BSG) envoie lesdites informations de la station de base voisine à la première station de base.
